(19) Europäisches Patentamt
European Patent Office
Office européen des brevets

(11) Veröffentlichungsnummer: **0 002 053**
**B1**

# (12) EUROPÄISCHE PATENTSCHRIFT

(45) Veröffentlichungstag der Patentschrift: **05.05.82**

(51) Int. Cl.³: **B 01 D 13/04,** A 61 M 1/03, C 08 G 69/26

(21) Anmeldenummer: **78101370.1**

(22) Anmeldetag: **15.11.78**

## (54) Hämofiltrationsmembran auf Basis von Polyamid, Verfahren zu ihrer Herstellung und ihre Verwendung.

(30) Priorität: **21.11.77 DE 2751910**

(43) Veröffentlichungstag der Anmeldung: **30.05.79 Patentblatt 79/11**

(45) Bekanntmachung des Hinweises auf die Patenterteilung: **05.05.82 Patentblatt 82/18**

(84) Benannte Vertragsstaaten: **BE DE FR GB NL SE**

(56) Entgegenhaltungen:
**DE-A-1 941 022**
**DE-A-2 334 230**
**DE-A-2 342 072**
**DE-A-2 602 493**
**DE-A-2 704 600**

(73) Patentinhaber: **HOECHST AKTIENGESELLSCHAFT, Postfach 80 03 20, D-6230 Frankfurt/Main 80 (DE)**

(72) Erfinder: **Walch, Axel, Dr., Gräfstrasse 71, D-6000 Frankfurt/Main (DE)**
Erfinder: **Wildhardt, Jürgen, Bergstrasse 16, D-6271 Wallrabenstein (DE)**
Erfinder: **Beissel, Dieter, Klopstockstrasse 1, D-6200 Wiesbaden (DE)**

**EP 0 002 053 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Hämofiltrationsmembran auf Basis von Polyamid, Verfahren zu ihrer Herstellung und ihre Verwendung

Die Erfindung bezieht sich auf eine permselektive, asymmetrische Hämofiltrationsmembran auf Basis von Polyamid, auf Verfahren zu ihrer Herstellung und ihre Verwendung in Geräten zur Durchführung der Hämofiltration.

Die Hämofiltration ist ein bekanntes Verfahren zur Entgiftung des Blutes, d. h. zur Entfernung von selbst in geringer Konzentration vorhandenen toxischen Metaboliten und überschüssigem Wasser.

Unter Metaboliten sind diejenigen Bestandteile der lebenden Zelle zu verstehen, die den normalen Ablauf der Stoffwechselreaktionen steuern, sowie Stoffwechselprodukte, die im menschlichen oder tierischen Organismus gebildet oder abgebaut werden, z.B. Harnstoff, Proteine, Kohlehydrate und Elektrolyte, wie z.B. Natrium- oder Kaliumsalze.

Asymmetrische Membranen zeigen üblicherweise eine Gesamtdicke von 100 bis 500 Mikrometer. Ihre Struktur besteht aus einem relativ dicken, hochporösen Unterbau und einer extrem dünnen Haut von 0,1 bis 5 Mikrometer an der Oberseite. Diese Haut ist die eigentliche permselektive Membran, während die grobe, hochporöse Unterstruktur nur zur Stützung der Haut dient und selbst weder selektive Eigenschaften aufweist noch dem Filtratfluss einen nennenswerten hydrodynamischen Widerstand entgegensetzt.

Membranen dieser Art auf Basis von Polyamid sind bekannt und werden als entsalzend wirkende Membranen für die Durchführung der Reversosmose eingesetzt. Bei diesen als dicht anzusehenden Lösungs-Diffusionsmembranen vollzieht sich der Transport über einen Lösungsvorgang in der Membran, dem sich ein Diffusionsschritt anschliesst. Die Trennung hängt demnach vom Lösungsvermögen der Bestandteile der aufzubereitenden Lösung in der Membran ab. Diese, z.B. in den DE-OS 1 941 022, 1 949 847, 2 308 197, 2 401 428 oder 2 425 563 beschriebenen, Polyamidmembranen sind insbesondere wegen ihrer Molekulargewichtsausschlussgrenze und Ultrafiltrationsleistung sowie ihrer Additive für die Hämofiltration nicht geeignet.

Für die Durchführung der Hämofiltration geeignete Membranen müssen hingegen Porenmembranen sein, wobei der Porendurchmesser die Molekulargewichtsausschlussgrenze der Membran bestimmt, d. h. nur die Stoffe, deren Moleküle kleiner sind als die eine bestimmte Grösse aufweisenden Poren, sollen die Membran quantitativ passieren. Bis zu einer definierten Molekülgrösse sollen somit alle Metabolite ohne Unterschied im Molekulargewicht vollständig und im ähnlichen Konzentrationsverhältnis wie im Blut entfernt werden.

Die Hämofiltration arbeitet mit einer einstellbaren Druckdifferenz als treibender Kraft. Die toxischen Metabolite und überschüssiges Wasser werden aufgrund eines an der Membran anliegenden Druckgradienten und der resultierenden konvektiven Strömung rascher aus dem Blut eliminiert und abtransportiert, als dies durch die herkömmliche Hämodialyse möglich wäre. Für diese konvektive Strömung sind allerdings Membranen erforderlich, die eine relativ stabile Porenstruktur besitzen, welche durchgehenden Kapillaren ähnelt und unter Druck wenig kompressibel ist. Diese stationären Poren bzw. Kapillaren bilden für konvektive Strömungen einen geringeren Transportwiderstand als eine gelartige, homogene Porenstruktur. Membranen mit stabiler Porenstruktur werden auch makroporös oder heteroporös bezeichnet.

Die Hämofiltration zeigt zwar gegenüber der Hämodialyse verschiedene Vorteile, wie die Verkürzung der Behandlungsdauer chronisch Nierenkranker, die Entfernung toxischer Metabolite bei geringster Konzentration und die Minderung spezifischer Symptome, z.B. der Hypertonie; doch konnte sich dieses Verfahren noch nicht durchsetzen, da die bisher bekannten Membranen nicht allen Erfordernissen gerecht werden.

Die Arbeitsweise der Hämofiltration, bei der im Gegensatz zur Hämodialyse ein Druck bis zu etwa 0,9 bar auf die Membran ausgeübt wird, stellt an die Membran hohe Anforderungen. Um eine ausreichende Betriebssicherheit und leichte Montierbarkeit zu gewährleisten, muss die Membran eine hohe Flexibilität und Festigkeit aufweisen, auch ohne dass eine zusätzliche Verstärkung in die Membran eingearbeitet oder eine stützende Unterlage vorhanden ist. Eine Verstärkung, die in herkömmliche Membranmaterialien eingearbeitet ist, hat meist den Nachteil, dass die wirksame Membranfläche verringert und das Auftreten von Fehlstellen begünstigt wird. Eine stützende Unterlage hat ferner eine zu dicke, unflexible Membran zur Folge. Ferner ist zu berücksichtigen, dass jede Verstärkung bzw. Stützung der Membran einen zusätzlichen Aufwand an Material bedeuten und zusätzliche Verfahrensschritte bei der Membranherstellung notwendig machen würde. Die Nassdicke der besonders vorteilhaften selbsttragenden Membran, d.h. ihre Dicke in wässriger Lösung und in Blut, sollte ausserdem aufgrund apparativer Erfordernisse unter 100 Mikrometer liegen; nur dann ist in Hämofiltrationsgeräten ein optimales Blutströmungsprofil und die notwendige Kompaktheit des Gerätes gewährleistet. Eine Verringerung der Nassdicke auf Werte unter 100 Mikrometer führt jedoch bei den meisten Membranen zu Mikrolöchern und bei selbsttragenden Membranen zu einer ungenügenden Festigkeit. Ferner ist die Auswirkung dieser Verringerung auf die Ultrafiltrationsleistung und auf die Molekulargewichtsausschlussgrenze sowie auf andere Eigenschaften gewöhnlich negativ oder zumindest nicht abzusehen.

Die im Wasser wie im Blut gemessenen Werte für die Ultrafiltrationsleistung und die Molekulargewichtsausschlussgrenze der Membran müssen innerhalb bestimmter Grenzen liegen, wobei die für Blut erhaltenen Werte mit denen für Wasser

vergleichbar sein sollten. Ist die Ultrafiltrationsleistung für Wasser zu klein oder fällt sie bei Verwendung von Blut gegenüber Wasser stark ab, so muss nachteiligerweise entweder eine allzu grosse Membranfläche zur ausreichend schnellen Wasserentfernung eingesetzt oder eine relativ lange Behandlungsdauer in Kauf genommen werden. Bei einer zu grossen Ultrafiltrationsleistung ist die Eliminierung des Wassers zu rasch, was zu Problemen bezüglich der Nachlieferung von Metaboliten aus Zellkompartimenten und zu Symptomen des Disäquilibriums führt und durch aufwendige Regulationsmassnahmen kompensiert werden muss. Ausserdem ist die Ultrafiltrationsleistung in gewissen Grenzen mit der Molekulargewichtsausschlussgrenze verknüpft.

Die Molekulargewichtsausschlussgrenze sollte möglichst einen Bereich umfassen, in dem einerseits die Entfernung auch kleinerer makromolekularer Metabolite möglich ist und anderseits die Verluste an grösseren lebensnotwendigen Proteinen, insbesondere an Serumalbumin, gering gehalten werden. Vor allem müsste eine optimale Membran aus Gründen der Reinheit aus einer möglichst geringen Anzahl von mit Wasser mischbaren, zumindest in Spuren nicht toxischen Komponenten herstellbar sein, was zudem den Herstellungsprozess wesentlich vereinfachen würde.

Die Membran muss möglichst weitgehend frei von toxischen Rückständen sein oder auf einfache Weise von diesen befreit werden können, ohne dass hierbei eine nennenswerte physikalische oder chemische Veränderung der Membran eintritt. Insbesondere müssen sich die bei der Herstellung der Membran verwendeten Lösungs-, Fäll- und Reinigungsmittel quantitativ entfernen lassen.

Ein weiteres Erfordernis an das membranbildende Polymere ist eine relativ geringe Wasseraufnahme; ein gering hydratisiertes Polymeres bildet die für die Membran erforderliche stabile Porenstruktur, die durchgehenden stationären Kapillaren ähnelt. Nur dann wird eine einfache Handhabung der trockenen Membran bei der Verarbeitung und dem Einbau in die entsprechenden Geräte ermöglicht und eine Kompression oder Veränderung der Membran unter den bei der Hämofiltration auftretenden Bedingungen vermindert.

Besonders vorteilhaft wäre ein solches Polymeres zur Herstellung nicht schrumpfender, trocken lagerfähiger Membranen, die als Hämofilter leicht zu montieren und trocken zu sterilisieren sind.

Eine optimal für die Hämofiltration geeignete Membran muss somit im trockenen und im nassen Zustand noch eine hohe Flexibilität und Festigkeit aufweisen, um sowohl eine sichere Verarbeitung und Bestückung der Geräte zu ermöglichen als auch Betriebssicherheit zu gewährleisten. Ausserdem hätte eine Membran aus einem thermoplastischen Material den Vorteil der Schweissfähigkeit, so dass sich hieraus Vereinfachungen bei der Verarbeitung ergeben könnten. Vor allem muss eine derartige Membran fehlstellenfrei, kontinuierlich und in technischem Massstab zu fertigen und leicht verarbeitbar sein, damit die Hämofiltration klinisch genutzt werden kann.

Die Gesamtheit all dieser vorteilhaften Eigenschaften weist bisher keine der bekannten Membranen auf.

So zeigen beispielsweise Celluloseacetat (NTIS Report PB-22 50 69) oder Polyacrylnitril (DE-AS 2 145 183) als Basismaterial von Membranen für die «künstliche Niere» eine unerwünscht hohe Wasseraufnahme und die damit verbundenen Nachteile. Sie erfordern beispielsweise sehr hohe Weichmacheranteile, um sie trocken zu lagern und weisen insbesondere eine schlechte Handhabung und geringe mechanische Festigkeit auf. Eine geringere Wasseraufnahme zeigen zwar Membranen aus Polysulfon (DE-AS 2 228 537) oder aromatischem Polyamid oder Polyimid (DE-AS 2 342 072) oder Cellulosetriacetat [«Biotechnische Umschau» 1 (9), 280, 1977], doch bestehen auch hier Probleme wegen der geringen Flexibilität, Weiterreissfestigkeit, Dehnung und Fehlstellenfreiheit insbesondere im trockenen Zustand bei Membrandicken unter 100 Mikrometer. Ferner werden die bekannten Membranen oft unter Zusatz von nur schwer entfernbaren Additiven gefertigt. Schliesslich zeigen Membranen aus den obengenannten Polymeren eine relativ starke Affinität zu Blutbestandteilen und hohe Proteinadsorption, wodurch die Permeationseigenschaften und die Blutverträglichkeit verschlechtert werden.

Überraschenderweise wurde gefunden, dass eine permselektive, asymmetrische Membran mit den in den Ansprüchen gekennzeichneten Merkmalen alle diese aufgezeigten Erfordernisse erfüllt.

Gegenstand der Erfindung ist somit eine permselektive, asymmetrische Hämofiltrationsmembran mit heteroporöser Struktur auf Basis von Polyamid. Ihr kennzeichnendes Merkmal besteht darin, dass sie aus einem Polyamid besteht, das eine Vielzahl von Gruppierungen der allgemeinen Formel

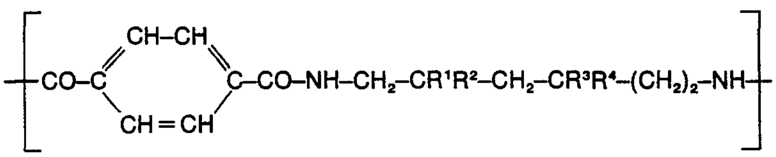

aufweist, wobei in der Formel $R^1$ ein Wasserstoffatom und $R^2$, $R^3$ und $R^4$ eine niedrige Alkylgruppe oder $R^3$ ein Wasserstoffatom und $R^1$, $R^2$ und $R^4$ eine niedrige Alkylgruppe bedeuten, eine Ultrafiltrationsleistung von mehr als $1{,}5 \cdot 10^{-3}$ bis $15 \cdot 10^{-3}$ cm/s · bar, gemessen mit Wasser bei 0,1 bar und 20°C, eine Dicke von gleich oder kleiner als 100 Mikrometer und eine Molekulargewichtsausschlussgrenze von 20 000 bis 70 000 zeigt.

Die niedrige Alkylgruppe ist vorzugsweise eine Methyl- oder Äthylgruppe.

Das erfindungsgemässe, membranbildende Polymere ist insbesondere ein Polykondensat aus Terephthalsäure und aus einer 1:1-Isomerenmischung von 2,2,4- und 2,4,4-Trimethylhexamethylendiamin. Dieses Polyamid ist beispielsweise in «Kunststoffe», 56, 542 (1966) beschrieben.

Die Membran ist asymmetrisch und selbsttragend. Für spezielle Hämofiltrationsgeräte, beispielsweise in denen schlauchförmige Membranen eingesetzt werden, kann die Membran jedoch auch mit einer stützenden Unterlage eine Einheit bilden oder ein eingearbeitetes Verstärkungsgewebe, -vlies oder -netz enthalten. Bei einer Dicke von 100 Mikrometer oder weniger der in einer flachen Bahn ausgebildeten Membran, selbst bei Werten bis zu 30 Mikrometer, zeigt die Membran in feuchtem und trockenem Zustand hohe Festigkeit, Flexibilität und Fehlstellenfreiheit. Sie kann aber auch die Form eines selbsttragenden Hohlrohres, z.B. Kapillare oder Hohlfaser, aufweisen, deren Wandstärke vorzugsweise 20 bis 80 Mikrometer beträgt.

Der mit einem Berstdruckprüfer (Nr. 820, Bauart, Schopper der Firma K.Frank GmbH, Mannheim, Deutschland) bei 20°C an unverstärkten flachen Membranen gemessene Berstdruck liegt bei 0,18 bis 0,52 bar sowohl im nassen wie im trokkenen Zustand, die Reissdehnung beträgt 60 bis 120% (DIN 53455, Einspannlänge 50 mm, Zuggeschwindigkeit 50 mm/min) und die Weiterreissfestigkeit 20 bis 50 N/mm (DIN 53363).

Die Membran ist im trockenen Zustand beispielsweise mit einem Wärmekontaktgerät schweissfähig, wobei die Schweisstemperatur bei etwa 190 bis 250°C liegt.

Die Ultrafiltrationsleistung bei der Ultrafiltration von Wasser wird an der zuvor getrockneten und rückgefeuchteten Membran in einer zylindrischen Rührzelle (500 Umdrehungen/Minute, Volumen 350 ml) bei einer Membranfläche von 43 $cm^2$, einem transmembranen Druck von 0,1 bar und 20°C gemessen. Die erhaltenen Werte, d.h. Permeat ($cm^3$) pro Zeiteinheit (s), Druck (bar) und Membranfläche ($cm^2$) liegen zwischen $1{,}5 \cdot 10^{-3}$ und $15 \cdot 10^{-3}$ cm/s · bar (20°C). Ihre Ultrafiltration, gemessen mit Rinderblut, liegt um einen Faktor von maximal 6, vorzugsweise maximal 3 unter dem mit Wasser gemessenen Wert.

Das Rückhaltevermögen gegen beispielsweise Dextran 70000 der Fa. Pharmacia, Uppsala, Schweden, wird in einer zylindrischen Rührzelle (500 Umdrehungen/Minute, Volumen 350 ml) gemessen. Die Membranfläche ist 43 $cm^2$, der Druck beträgt 0,1 bar, die Temperatur 20°C. Das Rückhaltevermögen R ist definiert als

$$2 = \frac{C_1 - C_2}{C_1} \cdot 100\%$$

$C_1$ ist die Konzentration der Dextran 70000-Lösung in Wasser gleich 1 Gewichtsprozent und $C_2$ die Konzentration von Dextran 70000 im Permeat. Für Dextran 70000 wurden Werte zwischen vorzugsweise 20 und 90% ermittelt. Die mit Dextran 70000 ermittelten Werte bezüglich des Rückhaltevermögens R sind vergleichbar mit den Werten, die bei Verwendung von Cytochrom C gemessen werden. Die Molekulargewichtsausschlussgrenze beträgt 20000 bis 70000. Diese Messungen wurden mit verschiedenen Proteinen mit definiertem Molekulargewicht in der beschriebenen Rührzelle durchgeführt, z.B. mit 0,1 Gewichtsprozent Cytochrom C, Trypsin, Pepsin, Albumine, Globuline.

Die Reproduzierbarkeit der Ultrafiltrationsleistung liegt pro Charge bei etwa ±10% und die der Molekulargewichtsausschlussgrenze bei etwa ±6000.

Die chemische Reinheit der Membran entspricht der Blutbeutelnorm nach DIN 58361. Die Membran zeigt keine Toxizität oder Hämolyse; dies wurde nach DIN 58372 beurteilt.

Gegenstand der Erfindung ist ferner das in den Ansprüchen gekennzeichnete Verfahren zur Herstellung einer permselektiven, asymmetrischen Hämofiltrationsmembran mit heteroporöser Struktur auf Basis von Polyamid in Form einer flachen Bahn.

Die Polyamid enthaltende Lösung, die eine Viskosität von 0,5 bis 50 Pa · s (20°C) zeigt, wird auf einen Träger mit möglichst glatter Oberfläche aufgebracht, wobei vorzugsweise zumindest die Beschichtungsseite des Trägers aus Kunststoff besteht. So ist der Träger insbesondere eine Polyäthylenfolie, ein silikonisiertes Papier oder ein Kunststoff-Vlies. Es ist jedoch auch möglich, ein Metallband oder eine Metalltrommel als Träger einzusetzen, z.B. aus poliertem Edelstahl. Die Lösung besteht aus einem oder mehreren mit Wasser mischbaren organischen Lösungsmitteln, wie z.B. Dimethylacetamid, Äthanol, Aceton, Glycerin und zu 60 bis 100 Gew.-% (bezogen auf das Lösungsmittelgemisch) aus dem vergleichsweise nichttoxischen Dimethylsulfoxid und 10 bis 25 Gew.-% (bezogen auf die Lösung) des obengenannten Polyamids. Die enthält gegebenenfalls weniger als 10 Gew.-% eines oder mehrerer Wasserstoffbrücken bildender Salze. Diese Salze sind beispielsweise Magnesium- und Lithiumhalogenid oder Magnesium- und Lithiumnitrat und werden bekanntlich auch bei der üblichen Membranherstellung eingesetzt. Im Gegensatz hierzu wird die erfindungsgemässe Membran vorzugsweise aus einer Polyamidlösung hergestellt, die keine Wasserstoffbrücken bildenden Salze enthält und eine Viskosität von 0,5 bis 10 Pa · s (20°C) besitzt. Die auf den Träger aufgebrachte Lösung enthält 15 bis 20 Gewichtsprozent Polyamid, wobei das Lösungsmittel aus 60 bis 100 Gewichtsprozent Dimethylsulfoxid besteht. Die Nassschichtdicke, mit der die Lösung beispielsweise aus einem Giesskopf oder mit einer Rakel auf den Träger aufgebracht wird, hängt ab u.a. von der Spaltbreite des Giessers bzw. der Höhe des Rakelspaltes, die zwischen 50 und 400 Mikrometer variieren können.

Die Beschichtung des Trägers erfolgt beispielsweise unter staubfreien Bedingungen, z.B. in einer Kammer mit laminarer Luftströmung bei über 40% relativer Feuchte und einer konstanten Temperatur, insbesondere zwischen 20 und 50°C. Gegebenenfalls nach kurzer Verweildauer an der Luft erfolgt die Koagulation mit Wasser oder wässriger Lösung bei maximal 80°C. Es ist auch möglich, den Träger direkt in Wasser oder wässriger Lösung mit z. B. einer Düse bei Temperaturen von maximal 80°C zu beschichten. Die erhaltene Membran wird gegebenenfalls in einem weiteren Verfahrensschritt vom Träger entfernt. Dieser Vorgang kann nach der Koagulation oder nach einem der folgenden Verfahrensschritte durch Abheben oder Abziehen erfolgen.

Nach der Koagulation wird die Membran bei maximal 80°C von anhaftendem Gemisch aus Lösungsmittel und Fällmittel befreit. Hierzu wird die Membran beispielsweise mit Wasser oder einer wässrigen Lösung behandelt, wodurch das Lösungsmittel für das Polyamid nahezu völlig entfernt wird.

Gegebenenfalls wird die Membran nach der Beschichtung des Trägers und vor dem Trocknen mit Weichmacher behandelt. Man nimmt hierzu beispielsweise eine wässrige Lösung, die maximal 50 Gewichtsprozent Glycerin enthält und eine Temperatur von 20 bis 80°C aufweist, und arbeitet nach dem aus der DE-OS 2 456 174 bzw. US-PS 3 957 935 bekannten Prinzip. Danach erfolgt die Trocknung bei maximal 80°C, wobei man beispielsweise ein Heissluftgebläse verwendet. Die zugeführte Heissluft kann 80°C übersteigen, sofern die Membran nicht über diese Temperatur erhitzt wird. Anstelle des eigenen Weichmacherbades kann der Weichmacher im Wasserbad oder in der wässrigen Lösung des vorhergehenden Waschprozesses enthalten sein. Abschliessend wird die Membran auf die gewünschte Breite und/ oder Länge zugeschnitten. In einer Abwandlung des Verfahrens wird die Membran nicht vom Träger entfernt, sondern am Ende des Verfahrens gemeinsam mit dem Träger aufgerollt.

Weitere Abwandlungen des Verfahrens bestehen darin, die Membran erst nach dem Waschprozess, nach dem Weichmacherbad oder nach dem Trocknungsprozess von der Trägerbahn zu entfernen, wobei die Trägerbahn endlos ist oder aus einem Band besteht, das nach dem Entfernen der Membran aufgerollt wird.

Das erfindungsgemässe Verfahren wird anhand der folgenden Beispiele in Verbindung mit den Verfahrensschemata der Fig. 1 bis 4 erläutert, ohne sich hierauf zu beschränken. Für funktionsgleiche Elemente werden gleiche Bezugsziffern verwendet.

Fig. 1 zeigt eine Verfahrensvariante zur Herstellung der Membran, die nach dem Trocknen vom Träger abgenommen wird.

Fig. 2 zeigt eine weitere Ausführungsform des Verfahrens, wobei die Membran vor dem Durchlaufen der Waschvorrichtung von einem umlaufenden Träger abgenommen wird.

Fig. 3 und 4 zeigen weitere Variationsmöglichkeiten für das Verfahren gemäss Fig. 1.

Beispiel 1

10 Gewichtsprozent des durch Polykondensation aus 2,2,4- und 2,4,4-Trimethylhexamethylendiamin (Verhältnis 1:1) und Terephthalsäure hergestellten Polyamids mit einer Dichte von 1,12 g/cm³ (DIN 53479) und einer Wasseraufnahme von 40 mg (DIN 53472) werden in reinem Dimethylsulfoxid bei 60°C in einem Rührkessel innerhalb 15 Stunden gelöst und auf Raumtemperatur abgekühlt. Die Lösung weist eine Viskosität von 3,3 Pa · s bei 20°C auf. Die Lösung 7 wird, wie in Fig. 3 gezeigt, unter einem Vordruck von 1,5 bar durch einen Giesser 5 mit einem Spalt 6 (Spaltbreite 300 Mikrometer) auf ein bandförmiges Vlies 2 aus Polypropylen einer Dicke von 30 Mikrometer gegossen, das von der Rolle 1 abgezogen wird und über Rollen 3 in ein Fällbad 4 läuft und dort umgelenkt wird. Das Aufbringen erfolgt staubfrei mit laminarer Luftströmung bei 70% relativer Feuchte und einer konstanten Temperatur von 30°C. Das beschichtete bandförmige Vlies 2 wird mit einer Geschwindigkeit von 7 m/min in ein Fällbad 4 mit Wasser von 20°C geführt, wo die Koagulation des Polyamids stattfindet. Über Umlenkwalzen 9 wird das bandförmige Vlies 2 zusammen mit der Membran 14 durch eine Waschvorrichtung 8 mit Wasser und 30 Gewichtsprozent Glycerin von 70°C und anschliessend über Rollen 10 dem Trockner 11 zugeleitet, wo die Membran 14 bei 60 bis 80°C getrocknet wird. Die Membran 14 wird, wie in Fig. 3 gezeigt, am Ende des Trockners 11 zusammen mit der Trägerbahn 2 auf der Walze 28 aufgewickelt.

Gegebenenfalls wird die Membran einer nicht dargestellten Zuschneidestation zugeführt.

Die erhaltene Membran zeigt mit dem Träger eine Dicke von 80 Mikrometer, eine Ultrafiltrationsleistung mit Wasser von $5{,}7 \cdot 10^{-3}$ cm/s · bar, mit Rinderblut von $1{,}9 \cdot 10^{-3}$ cm/s · bar, ein Rückhaltevermögen R gegen Dextran 70 000 von 44% sowie eine Molekulargewichtsausschlussgrenze von $58\,000 \pm 6000$.

Beispiel 2

16 Gewichtsprozent des in Beispiel 1 genannten Polyamids werden in reinem Dimethylsulfoxid bei 60°C innerhalb von 12 Stunden gelöst. Nach Abkühlen auf Raumtemperatur (20°C) zeigt die Lösung eines Viskosität von 1,1 Pa · s.

Die Lösung 7 wird, wie in Fig. 1 gezeigt, auf ein Band 2 aus Polyäthylenfolie gestrichen, das von der Rolle 1 abgezogen wird und über Rollen 3 in einem Fällbad 4 läuft. Anstelle des Giessers 5 ist eine Rakelvorrichtung installiert. Rolle 1 und Rakelvorrichtung sind derart montiert, dass der Auftrag unter dem Wasserspiegel erfolgt. Die beschichtete Trägerbahn wird mit einer Geschwindigkeit von 8 m/min durch das Fällbad mit Wasser von 32°C geführt, wo die Koagulation des Polyamids stattfindet. Über Umlenkwalzen 9 wird die Trägerbahn zusammen mit der Membran 14 durch eine Waschvorrichtung 8 geführt, die ein Gemisch aus Wasser mit 50 Gewichtsprozent Glycerin bei 70°C enthält. Sie wird anschliessend über Rollen 10 dem Trockner 11 zugeführt, wo die Membran 14

bei 50 bis 60°C getrocknet wird. Dabei befindet sich die Walze 13 zur Aufwicklung des Bandes 2 hinter dem Trockner 11, so dass die Trennung der Membran 14 vom Band 2 erst nach Trocknung erfolgt. Die Membran 14 wird einer nicht dargestellten Zuschneidestation zugeführt und auf der Walze 12 aufgewickelt. Die erhaltene Membran zeigt eine Dicke von 50 Mikrometer, eine Ultrafiltrationsleistung mit Wasser von $6,1 \cdot 10^{-3}$ cm/s · bar, mit Rinderblut von $2,4 \cdot 10^{-3}$ cm/s · bar, ein Rückhaltevermögen R gegen Dextran 70 000 von 53% sowie eine Molekulargewichtsausschlussgrenze von 51 000 $\pm$ 6000.

Die Membran zeigt im trockenen und im nassen Zustand eine Reissdehnung von 96 bis 105%, eine Weiterreissfestigkeit von 27 bis 29 N/mm und einen Berstdruck von 0,20 bis 0,22 bar.

Beispiel 3

20 Gewichtsprozent des in Beispiel 1 genannten Polyamids werden in reinem Dimethylsulfoxid bei 70°C innerhalb 10 Stunden gelöst. Nach Abkühlen auf Raumtemperatur (22°C) zeigt die Lösung eine Viskosität von 5,5 Pa · s. Die Lösung 7 wird, wie in Fig. 4 gezeigt, auf ein bandförmiges silikonisiertes Papier 2 aufgebracht, das von der Rolle 1 abgezogen wird und über Rollen 3 in ein Fällbad 4 läuft und dort umgelenkt wird. Anstelle des gezeigten Giessers 5 wird ein Rakelmesser verwendet. Das Aufbringen erfolgt staubfrei mit laminarer Luftströmung bei 60% relativer Feuchte und einer konstanten Temperatur von 25°C. Das beschichtete Papier 2 wird mit einer Geschwindigkeit von 4 m/min in ein Fällbad 4 mit Wasser von 35°C geführt, wo die Koagulation des Polyamids stattfindet. Über Umlenkwalzen 9 wird das Papier 2 zusammen mit der Membran 14 durch eine Waschvorrichtung 8 geführt, die ein Gemisch aus Wasser mit 40 Gewichtsprozent Glycerin bei 60°C enthält. Sie wird anschliessend über Rollen 10 dem Trockner 11 zugeleitet, wo die Membran 14 bei 60 bis 70°C getrocknet wird. Dabei befindet sich die Walze 13 zur Aufwicklung des Papiers 2 bereits vor dem Trockner 11, so dass die Trennung der Membran 14 von dem Papier 2 noch vor der Trocknung erfolgt. Die Membran 14 wird einer nichtdargestellten Zuschneidestation zugeführt und auf der Walze 12 aufgewickelt.

Die erhaltene Membran zeigt eine Dicke von 70 Mikrometer, eine Ultrafiltrationsleistung mit Wasser von $2,2 \cdot 10^{-3}$ cm/s · bar, mit Rinderblut von $1,5 \cdot 10^{-3}$ cm/s · bar, ein Rückhaltevermögen R gegen Dextran 70 000 von 58% sowie eine Molekulargewichtsausschlussgrenze von 47 000 $\pm$ 6000.

Die Membran zeigt im trockenen und im nassen Zustand eine Reissdehnung von 66 bis 71%, eine Weiterreissfestigkeit von 43 bis 46 N/mm und einen Berstdruck von 0,32 bis 0,35 bar.

Beispiel 4

18 Gewichtsprozent des in Beispiel 1 genannten Polyamids wurden in 57 Gewichtsprozent Dimethylsulfoxid und 25 Gewichtsprozent Aceton bei 20°C innerhalb 16 Stunden gelöst. Die Lösung zeigt eine Viskosität von 0,9 Pa · s. Die Lösung 7 wird, wie in Fig. 1 gezeigt, auf ein Band 2 aus Polyäthylenfolie gestrichen, das von der Rolle 1 abgezogen wird und über Rollen 3 in ein Fällbad 4 läuft und dort umgelenkt wird. Ein Rakelmesser wird anstelle des Giessers 5 installiert. Das Aufbringen erfolgt staubfrei mit laminarer Luftströmung bei 85% relativer Luftfeuchte und einer konstanten Temperatur von 25°C. Die beschichtete Trägerbahn 2 wird mit einer Geschwindigkeit von 6 m/min in ein Fällbad 4 mit Wasser von 45°C geführt, wo die Koagulation des Polyamids stattfindet. Über Umlenkwalzen 9 wird die Trägerbahn zusammen mit der Membran 14 durch eine Waschvorrichtung 8 geführt, die ein Gemisch aus Wasser mit 30 Gew.-% Glycerin bei 70 °C enthält. Sie wird anschliessend über Rollen 10 dem Trockner 11 zugeführt, wo die Membran 14 bei 50 bis 60°C getrocknet wird. Dabei befindet sich die Walze 13 zur Aufwicklung des Bandes 2, wie in Fig. 1 gezeigt, hinter dem Trockner 11, so dass die Trennung der Membran 14 vom Band 2 erst nach Trocknung erfolgt. Die Membran 14 wird einer nicht dargestellten Zuschneidestation zugeführt und auf der Walze 12 aufgewickelt.

Die erhaltene Membran zeigt eine Dicke von 60 Mikrometer, eine Ultrafiltrationsleistung mit Wasser von $7,6 \cdot 10^{-3}$ cm/s · bar, mit Rinderblut von $2,7 \cdot 10^{-3}$ cm/s · bar, ein Rückhaltevermögen R gegen Dextran 70 000 von 75% sowie eine Molekulargewichtsausschlussgrenze von 33 000 $\pm$ 6000.

Die Membran zeigt im trockenen und im nassen Zustand eine Reissdehnung von 78 bis 89%, eine Weiterreissfestigkeit von 30 bis 41 N/mm und einen Berstdruck von 0,25 bis 0,28 bar.

Beispiel 5

Es wird, wie in Fig. 2 dargestellt, eine Lösung 7 aus Spalt 16 des Giessers 15 auf ein über Rollen 17 umlaufendes hochpoliertes Edelstahlband 18 gegossen. Das beschichtete Band 18 durchläuft das Fällbad 19, das mit Wasser als Fällmittel gefüllt ist. Die Membran 14 wird zwischen den Walzen 20 und 21 abgenommen und läuft über Rollen 22 durch das Wasserbad 23, wo restliches Lösungsmittel mit Wasser ausgewaschen wird, und durch den Behälter 27 mit wässriger Glycerinlösung. Nach Behandlung mit Heissluft von 80°C im Trockner 24 wird die Membran auf die Walze 25 aufgewickelt. Das umlaufende Band 18 wird mit der Trockenvorrichtung 26 von anhaftenden Lösungs- und Fällmitteln befreit. In einer Variation des Verfahrens wird das Band 18 nach Entfernen der Membran 14 durch das Fällbad 19 zurück zur Spalte 16 des Giessers 15 geführt. Dann wird es beispielsweise mit Abstreifern von restlichen Flüssigkeitsspuren befreit.

Die nach dem erfindungsgemässen Verfahren erhaltenen asymmetrischen Membranen zeigen im feuchten und auch im trockenen Zustand bei einer Dicke von kleiner als 100 Mikrometer im Vergleich zu herkömmlichen Membranen eine Summe hervorragender Eigenschaften für die Hämofiltration. Sie zeigen hohe Festigkeit, Flexibilität und Fehlstellenfreiheit. Sie lassen sich trocken

lagern, montieren und sterilisieren. Sie sind frei von toxischen Rückständen, insbesondere durch Verwendung von Dimethylsulfoxid als Lösungsmittel, da sie sich bei Temperaturen bis 80°C mit Wasser oder wässriger Lösung extrahieren lassen. Die Membranen sind sehr gut blutverträglich. Ihre Proteinadsorption liegt unter 3 g/m² und ihre Permeationseigenschaften sind für Wasser und Blut vergleichbar. Aufgrund der vergleichsweise geringen Proteinadsorption von gewöhnlich kleiner als 3 g/m² bei der Ultrafiltration von Blut bei einem transmembranen Druck von 0,1 bar ist der Wert für die Ultrafiltrationsleistung für Blut gegenüber Wasser nur um einen Faktor von maximal 6, vorzugsweise maximal 3, vermindert. Die Membranen zeigen bei kontinuierlicher technischer Fertigung eine hohe Gleichmässigkeit ihrer Eigenschaften und sind aufgrund des thermoplastischen Materials sdhweissfähig. Das membranbildende Polymere besitzt ein geringes Wasseraufnahmevermögen, so dass man keine gelartige Membran erhält, sondern eine Membran mit relativ stabiler Porenstruktur, d.h. mit heteroporöser Struktur. Ferner zeigt die Membran den Vorteil, dass sie bei Verlust des Weichmachers nicht versprödet oder schrumpft. Es genügt, wenn der zur Aufrechterhaltung einer hohen Durchlässigkeit vorteilhafte Weichmacher nur in relativ geringem Anteil eingesetzt wird.

Die weiteren Eigenschaften dieser Membran wurden bereits oben beschrieben. Die Membran ist somit für die Verwendung in Geräten zur Durchführung der Hämofiltration besonders geeignet.

Sofern die Membran die Form eines Hohlrohres aufweisen soll, verfährt man in bekannter Weise: Eine Polyamid enthaltende Lösung einer Viskosität von 20 bis 50 Pa · s bei 20°C wird durch eine Ringdüse mit einem Stützgas, insbesondere aber einer Stützflüssigkeit die zugleich koagulierend wirkt, in ein Fällbad extrudiert und in entsprechender Weise nachbehandelt.

**Patentansprüche**

1. Permselektive, asymmetrische Hämofiltrationsmembran mit heteroporöser Struktur auf Basis von Polyamid, dadurch gekennzeichnet, dass sie

aus einem Polyamid besteht, das eine Vielzahl von Gruppierungen der allgemeinen Formel

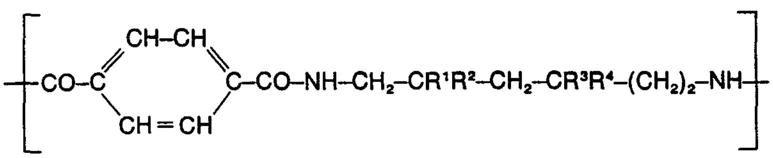

aufweist, wobei in der Formel $R^1$ ein Wasserstoffatom und $R^2$, $R^3$ und $R^4$ eine niedrige Alkylgruppe oder $R^3$ ein Wasserstoffatom und $R^1$, $R^2$ und $R^4$ eine niedrige Alkylgruppe bedeuten,

eine Ultrafiltrationsleistung von mehr als $1{,}5 \cdot 10^{-3}$ bis $15 \cdot 10^{-3}$ cm/s · bar, gemessen mit Wasser bei 0,1 bar und 20°C,

eine Dicke von gleich oder kleiner als 100 Mikrometer und

eine Molekulargewichtsausschlussgrenze von 20 000 bis 70 000 zeigt.

2. Membran nach Anspruch 1, dadurch gekennzeichnet, dass ein Polyamid eingesetzt wird, in dem die niedrige Alkylgruppe eine Methyl- oder Äthylgruppe ist.

3. Membran nach Anspruch 1 oder 2, dadurch gekennzeichnet, dass die Diaminreste des Polyamids ein Isomerengemisch sind.

4. Membran nach einem der Ansprüche 1 bis 3, dadurch gekennzeichnet, dass sie als flache Bahn ausgebildet ist.

5. Membran nach Anspruch 4, dadurch gekennzeichnet, dass die Ultrafiltrationsleistung gemessen mit Blut bei 0,1 bar um einen Faktor von maximal 6 gegenüber dem mit Wasser gemessenen Wert niedriger ist.

6. Membran nach Anspruch 4, dadurch gekennzeichnet, dass sie unverstärkt im trockenen und nassen Zustand eine Reissdehnung von 60 bis 120%, eine Weiterreissfestigkeit von 20 bis 50 N/mm und einen Berstdruck von 0,18 bis 0,52 bar aufweist.

7. Verfahren zur Herstellung einer permselektiven asymmetrischen Hämofiltrationsmembran mit heteroporöser Struktur auf Basis von Polyamid in Form einer flachen Bahn nach einem der Ansprüche 4 bis 6, dadurch gekennzeichnet, dass man

einen Träger fortlaufend mit einer Lösung einer Viskosität von 0,5 bis 50 Pa · s (20°C) beschichtet, die 15 bis 20 Gewichtsprozent eines Polyamids in einem oder mehreren mit Wasser mischbaren organischen Lösungsmittel und gegebenenfalls weniger als 10 Gewichtsprozent solcher Salze enthält, die Wasserstoffbrücken bilden können, wobei das Lösungsmittel oder Lösungsmittelgemisch aus 60 bis 100 Gewichtsprozent Dimethylsulfoxid besteht und wobei das Polyamid eine Vielzahl von Gruppierungen der allgemeinen Formel

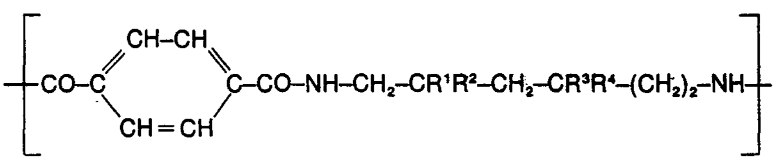

aufweist, in der $R^1$ ein Wasserstoffatom und $R^2$, $R^3$ und $R^4$ eine niedrige Alkylgruppe oder $R^3$ ein Wasserstoffatom und $R^1$, $R^2$ und $R^4$ eine niedrige Alkylgruppe bedeuten,

die Beschichtung bei maximal 80°C mit Wasser oder einer wässrigen Lösung zur Koagulation bringt,

den koagulierten Film bei maximal 80°C von restlichem Lösungs- oder Fällmittel durch Behandeln mit Wasser oder einer wässrigen Lösung befreit und die Membran trocknet, wobei nach Beschichtung des Trägers und vor dem Trocknen gegebenenfalls mit Weichmacher behandelt wird und wobei nach der Koagulation des Polyamids oder während oder nach einer der folgenden Verfahrensstufen gegebenenfalls der Träger von der Membran entfernt wird.

8. Verfahren nach Anspruch 7, dadurch gekennzeichnet, dass die Lösung des Polyamids eine Viskosität von 0,5 bis 10 Pa · s (20°C) besitzt und keine Wasserstoffbrücken bildende Salze enthält.

9. Verfahren nach einem der Ansprüche 7 bis 8, dadurch gekennzeichnet, dass der Träger zumindest auf seiner Oberfläche aus Kunststoff besteht.

10. Verwendung der Membran nach einem der Ansprüche 1 bis 9 in einem Gerät zur Durchführung der Hämofiltration.

**Claims**

1. A permselective asymmetric hemofiltration membrane on a basis of polyamide, having a heteroporous structure, characterized in that it comprises a polyamide showing a plurality of groupings of the general formula:

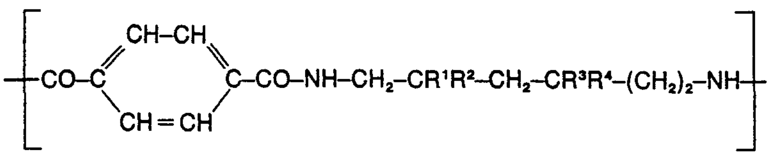

with $R^1$ in the formula being a hydrogen atom and $R^2$, $R^3$ and $R^4$ being a low molecular weight alkyl group, or $R^3$ being a hydrogen atom and $R^1$, $R^2$, and $R^4$ being a low molecular weight alkyl group, the membrane further being characterized in that it has an ultrafiltration capacity ranging from $1.5 \cdot 10^{-3}$ to $15 \cdot 10^{-3}$ cm/s · bar, measured for water at 0.1 bar and 20°C, a thickness which is equal to or less than 100 µm, and a molecular weight exclusion limit ranging from 20 000 to 70 000.

2. A membrane according to Claim 1, characterized in that a polyamide is used in which the low molecular weight alkyl group is a methyl group or an ethyl group.

3. A membrane according to Claim 1 or Claim 2, characterized in that the diamine groups of the polyamide are an isomer mixture.

4. A membrane according to any one of Claims 1 to 3, characterized in that it is in the form of a flat web.

5. A membrane according to Claim 4, characterized in that the ultrafiltration capacity measured for blood at 0.1 bar is reduced by a factor not exceeding 6, as compared to the value measured for water.

6. A membrane according to Claim 4, characterized in that it shows in the dry and in the wet state and when it is not reinforced an elongation at break ranging from 60 to 120%, a resistance to tear propagation ranging from 20 to 50 N/mm, and a bursting pressure ranging from 0.18 to 0.52 bar.

7. A process for the manufacture of a permselective asymmetric hemofiltration membrane on a basis of polyamide, having a heteroporous structure and being in the form of a flat web, according to any one of Claims 4 to 6, characterized in that a support is continuously coated with a solution having a viscosity ranging from 0.5 to 50 Pa · s (20°C) and containing from 15 to 20 percent by weight of a polyamide in one or several organic solvents which are miscible with water and, if appropriate, less than 10 percent by weight of salts of a kind capable of forming hydrogen bonds, with the solvent or solvent mixture consisting of dimethylsulfoxide to an amount ranging between 60 and 100 percent by weight, and with the polyamide showing a plurality of groupings of the general formula:

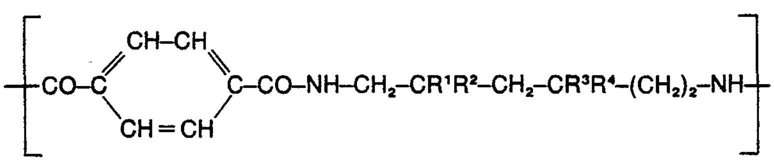

in which $R^1$ is a hydrogen atom and $R^2$, $R^3$, and $R^4$ are a low molecular weight alkyl group, or $R^3$ is a hydrogen atom and $R^1$, $R^2$, and $R^4$ are a low molecular weight alkyl group, and in which process the coating is caused to coagulate in water or an aqueous solution at a maximum temperature of 80°C, the coagulated film is freed from the remaining solvent or precipitant by treating it with water on an aqueous solution at a maximum temperature of 80°C, and the membrane is then dried; with the membrane, if appropriate, being treated with a plasticizer following coating of the support and prior to drying, and with the support, if appropriate, being

removed from the membrane following coagulation of the polyamide or during or after one of the ensuing process steps.

8. A process according to Claim 7, characterized in that the solution of the polyamide has a viscosity ranging from 0.5 to 10 Pa · s (20°C) and does not contain any salts forming hydrogen bonds.

9. A process according to Claim 7 or 8, characterized in that at least the upper surface of the support is made of a synthetic material.

10. Use of the membrane according to any of Claims 1 to 9 in an apparatus for carrying out hemofiltration.

## Revendications

1. Membrane pour l'hémofiltration à perméabilité sélective et asymétrique, possédant une structure hétéroporeuse, à base de plyamide, caracterisée en ce qu'elle est constituée par un polyamide possédant une pluralité de groupes de formule générale:

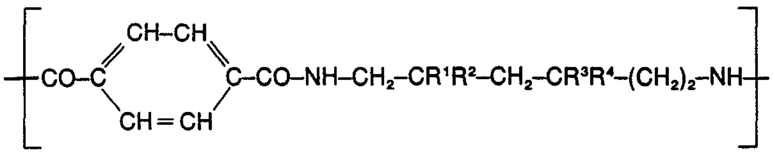

dans laquelle:

$R^1$ est un atome d'hydrogène et $R^2$, $R^3$, et $R^4$ chacun un groupe alkyle inférieur, ou

$R^3$ est un atome d'hydrogène et $R^1$, $R^2$ et $R^4$ sont chacun un groupe alkyle inférieur,

et en ce qu'elle présente:

un rendement à l'ultrafiltration supérieure à 1,5 · $10^{-3}$ cm/s · bar et jusqu'à 15 · $10^{-3}$ cm/s · bar, mesuré avec de l'eau à 0,1 bar et à 20°C, une épaisseur égale ou inférieure à 100 µm. et un poids moléculaire limite séparable compris entre 20 000 ± 70 000.

2. Membrane selon la revendication 1, caractérisée en ce que dans le polyamide le groupe alkyle inférieure est un groupe méthyle ou éthyle.

3. Membrane selon la revendication 1 ou 2, caractérisée en ce que les restes diamine du polyamide sont un mélange d'isoméres.

4. Membrane selon l'une des revendications 1 à 3, caractérisée en ce qu'elle se présente sous la forme d'une nappe plane.

5. Membrane selon la revendication 4, caractérisée en ce que le rendement à l'ultrafiltration mesuré avec du sang à 0,1 bar est inférieur à la valeur mesurée pour l'eau d'un facteur 6 au maximum.

6. Membrane selon la revendication 4, caractérisée en ce qu'elle présente, sans être renforcée, à l'état tant humide que sec, un allongement à la rupture comprise entre 60 et 120%, une résistance à la déchirure sur amorce comprise entre 20 et 50% N/mm et une pression à l'éclatement comprise entre 0,18 et 0,52 bar.

7. Procédé pour la fabrication d'une membrane pour l'hémofiltration à perméabilité sélective et asymétrique, possédant une structure hétéroporeuse, à base de polyamide, sous la forme d'une nappe plane, selon l'une des revendications 4 à 6, caractérisé en ce que l'on revêt en continu un support d'une solution ayant une viscosité comprise entre 0,5 et 50 Pa · s (20°C), contentant entre 15 et 20% en poids d'un polyamide dans un ou plusieurs solvants organiques miscibles à l'eau et éventuellement moins de 10% en poids de sels susceptibles de former des ponts d'hydrogène, le solvant ou le mélange de solvants étant constitué pour une proportion comprise entre 60 et 100% en poids de dimethylsulfoxyde et le polyamide possédant une pluralité de groupes de formule générale.

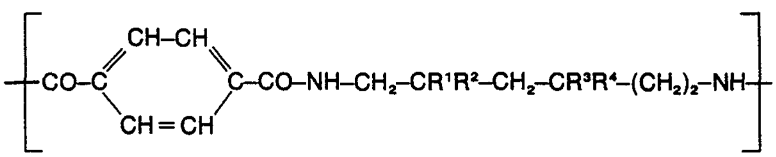

dans laquelle:

$R^1$ est un atome d'hydrogène et $R^2$, $R^3$ et $R^4$ sont chacun un groupe alkyle inférieur ou,

$R^3$ est un atome d'hydrogène et $R^1$, $R^2$ et $R^4$ sont chacun un groupe alkyle inférieur,

on fait coaguler le revêtement à une température qui n'excède pas les 80°C avec de l'eau ou avec une solution aqueuse, on libère le film coagulé à une température n'excédant pas les 80°C des résidus de solvant ou d'agent précipitant en le traitant avec de l'eau ou avec une solution aqueuse et on sèche la membrane,

et en ce qu'éventuellement, après l'application de la couche sur le support et avant la séchage, on traits éventuellement avec un plastifiant et en ce qu'éventuellement après la coagulation du polyamide ou pendant ou après l'un quelconque des stades du procédé, le support et la membrane sont séparés.

8. Procédé selon la revendication 7, caractérisé en ce que la solution du polyamide présente une viscosité comprise entre 0,5 et 10 Pa · s (à 20°C) et ne contient pas de sels formant des ponts d'hydrogène.

9. Procédé selon l'une quelconque des revendications 7 et 8, caractérisé en ce que la surface au moins du support est réalisée en matière synthétique.

10. Utilisation de la membrane selon l'une quelconque des revendications 1 à 9 dans un appareil conçu pour effectuer l'hémofiltration.

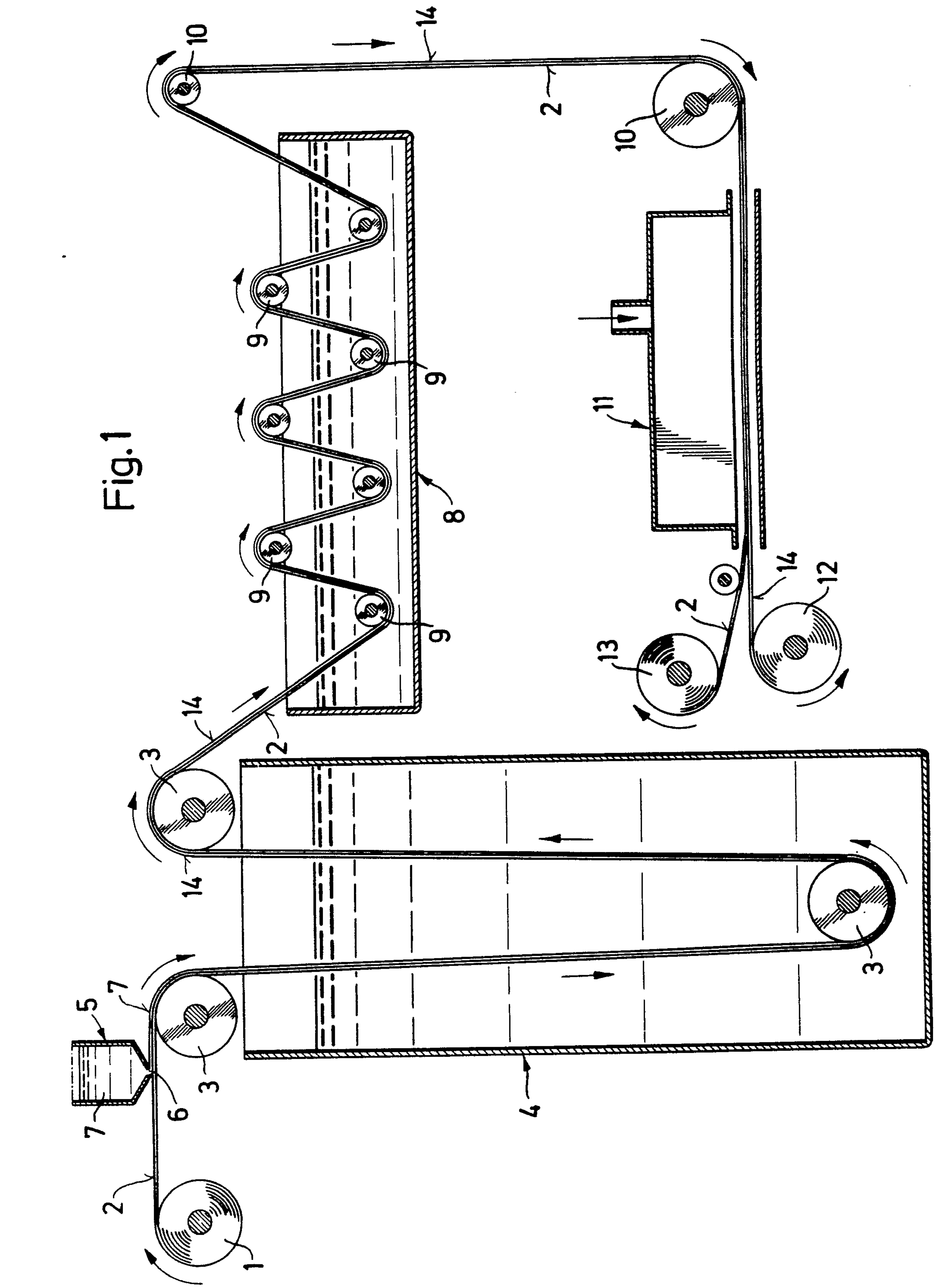


Fig.1

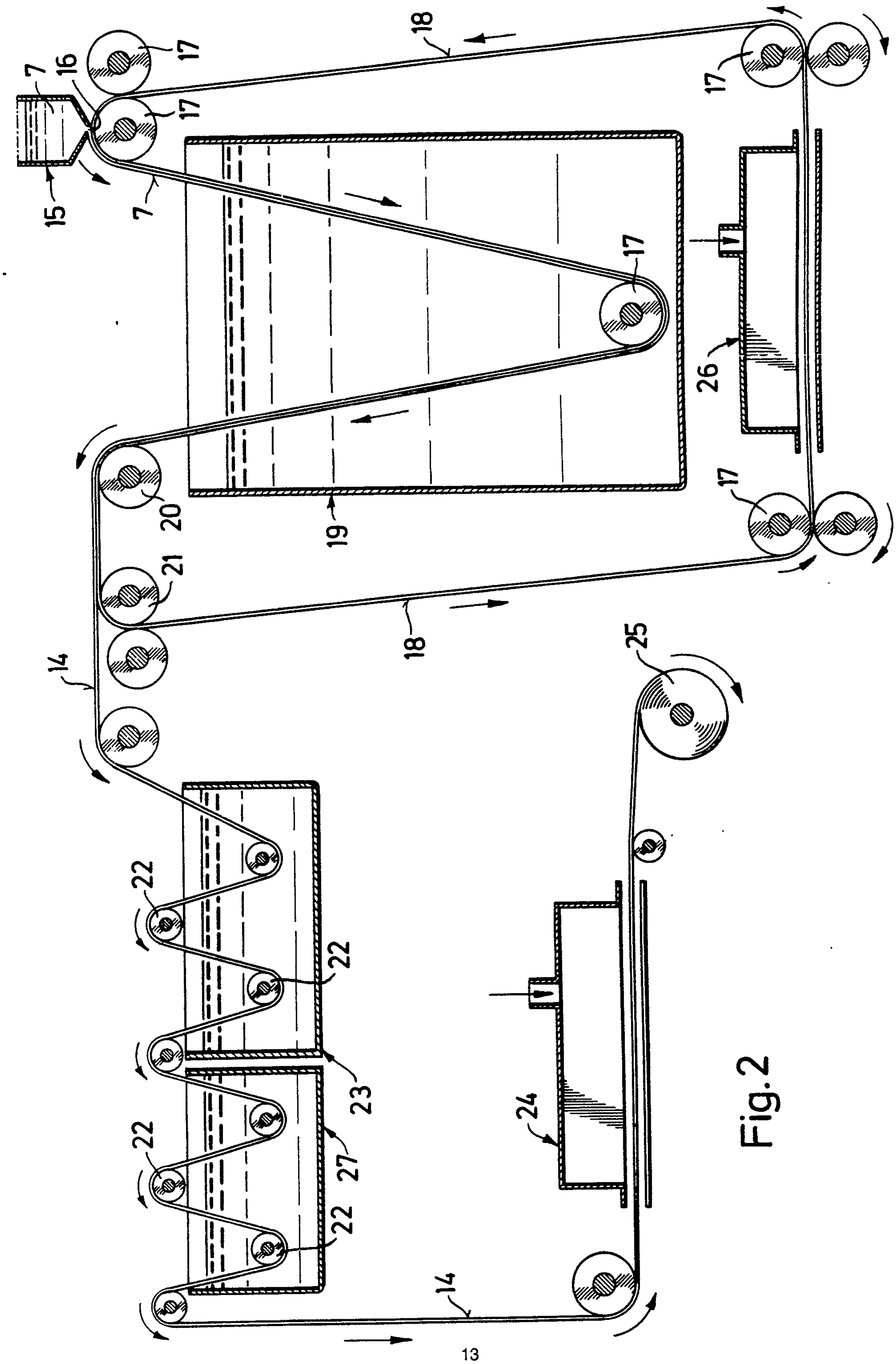


Fig. 2

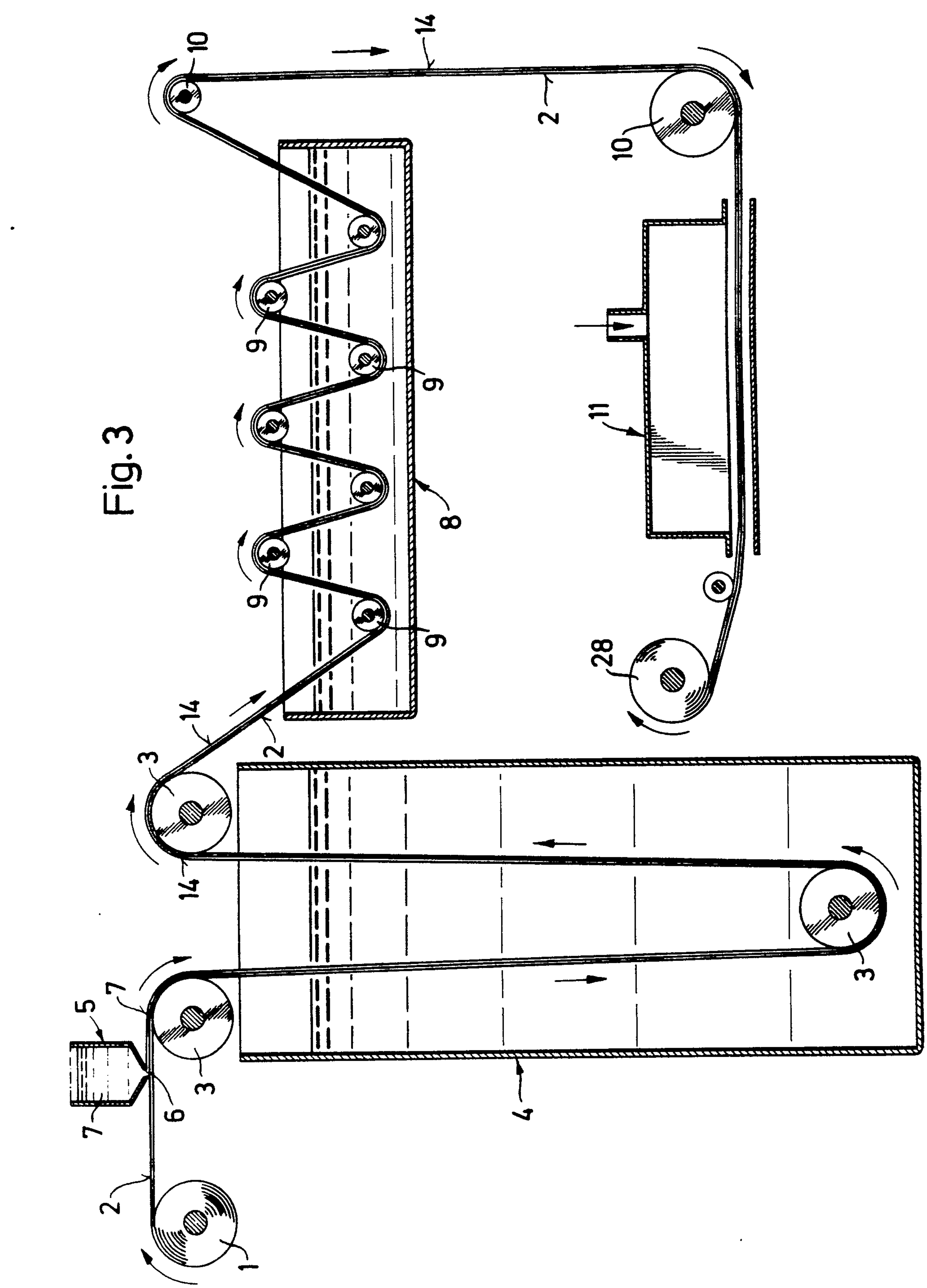


Fig. 3

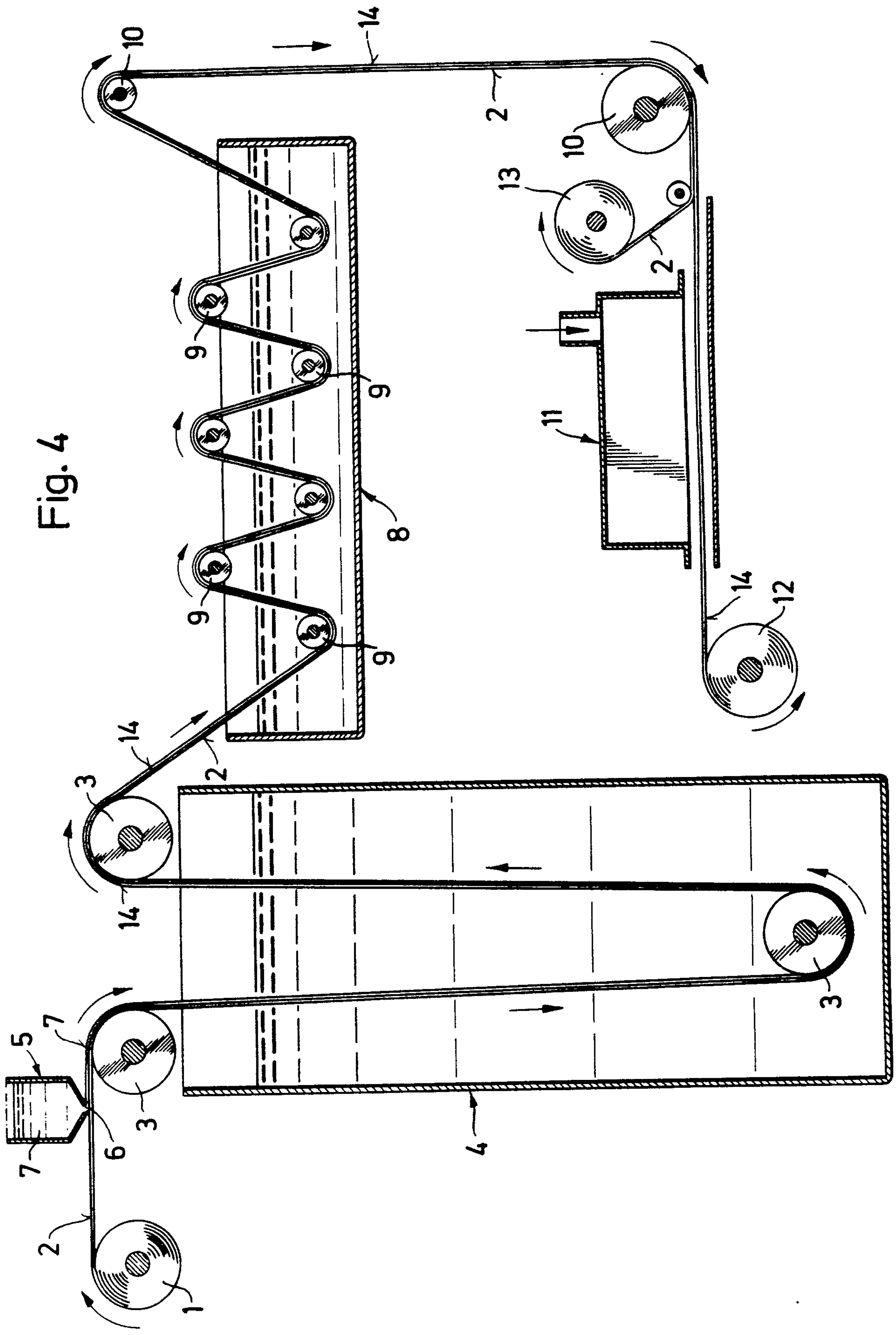


Fig. 4